# EUROPEAN PATENT SPECIFICATION

(11) **EP 1 788 202 B1**
(45) Date of publication and mention of the grant of the patent: **25.03.2009**
(21) Application number: 05110939.5
(22) Date of filing: 18.11.2005
(51) Int. Cl.: F01L 13/00, F02D 13/02, F02D 41/30, F01L 1/344

(54) **An internal combustion engine comprising a variable valve lift system and a method for controlling valve lift shifting**
Brennkraftmaschine mit einem Ventiltrieb mit variablem Ventilhub und Verfahren zur Steuerung des Ventilhubumschaltens
Moteur à combustion interne à système de levée de soupape variable et méthode de contrôle du changement d'une levée de soupape à l'autre

(43) Date of publication of application: 23.05.2007
(73) Proprietor: Ford Global Technologies, LLC, Dearborn, MI 48126 (US)
(72) Inventor: Lyngfelt, Thomas, 414 62, Göteborg (SE); Litorell, Martin, 414 59, Göteborg (SE); Ivarson, Mats, 417 44, Göteborg (SE)
(74) Representative: Holmberg, Magnus

(56) References cited:
- EP-A- 0 359 363
- EP-A- 1 013 899
- EP-A- 1 403 470
- US-A- 5 031 583
- US-A- 5 803 029
- PATENT ABSTRACTS OF JAPAN vol. 1996, no. 06, 28 June 1996 (1996-06-28) & JP 08 049514 A (NISSAN MOTOR CO LTD), 20 February 1996 (1996-02-20)

## Description

### TECHNICAL FIELD

The present invention relates to a method for controlling valve lift shifting in an internal combustion engine comprising a variable valve lift system whereby the engine can operate selectively in either of at least two valve lift modes, and a variable valve timing system such as known from JP-A-8 049 514 or US-A-5 803 029. The present invention also relates to an internal combustion engine comprising an engine control unit, a variable valve lift system whereby the engine can operate selectively in either of at least two valve lift modes, and a variable valve timing system such as known from JP-A-8 049 514 or US-A-5 803 029.

### BACKGROUND

In an internal combustion engine with variable valve lift system, for example a cam profile shifting (CPS) system as described in US5287830A, switching valve lift mode can introduce a step in the output torque of the engine, which can cause discomfort to persons in a vehicle in which the engine is operating.

### SUMMARY OF THE INVENTION

It is an object of the invention to minimise torque steps when shifting modes in a variable valve lift system of an internal combustion engine.

This object is reached by a method of the type mentioned initially, comprising controlling the variable valve timing system, here also referred to as the VVT system, so as to reduce the difference between two of the valve lift modes regarding the output torque of the engine by determining a balance value of the valve timing such that the output torque is essentially the same for two of the valve lift modes at the balance value.

The valve timing, or cam phase, is a very good parameter to be used in checking and minimising the variation of the engine output torque at valve lift mode shifts. The reason is as follows:

The explanation here is made with use of the expression volumetric efficiency, which relates to the air flow of the engine. The volumetric efficiency can be defined in a number of ways, for example as a function of air intake pressure and the piston displacement. The output torque is related to the volumetric efficiency and the load in the following way: At the operational condition where the torque is the same for more than one valve lift mode, also each of the volumetric efficiency and the load are the same for the same valve lift modes, under the condition that the air fuel ratio, engine friction and combustion efficiency remain the same in the valve lift modes. The volumetric efficiency is dependent mainly on the engine speed, the VVT position, the valve lift mode, and the pressure ratio across the cylinders, i.e. the intake/exhaust relative pressure. Therefore, it is in principle possible to find, for any given engine speed and any given intake/exhaust relative pressure, a VVT position value that gives the same volumetric efficiency, and therefore the same torque, in both valve lift modes. In other words, by finding this balance value of the VVT position, it is possible to obtain the same volumetric efficiency in more than one valve lift mode, and thereby to obtain the same output torque in more than one valve lift mode. Still differently worded, it is desirable to find a VVT position where the torque curves for two valve lift modes intersect. Thus, torque steps can be minimised when shifting modes in a variable valve lift system of an internal combustion engine.

Thus, the variable valve timing system is controlled based at least partially on the engine speed and a pressure parameter of the engine. Regarding the pressure parameter, as explained further below, the pressure ratio across the cylinders gives an accurate result, but can be approximated by a number of alternative parameters. More specifically, as explained closer below, in one alternative the pressure parameter is at least partly based on the pressure in an intake manifold of the engine, and in another alternative, the pressure parameter is at least partly based on the air flow in the intake manifold. In yet another alternative the variable valve timing system is controlled based at least partially on the engine speed and the position of a throttle valve of the engine.

Changing the valve lift mode at such a balance VVT position will secure a smooth valve lift mode transition. If for some reason the VVT position can not be set to the balance value, the VVT position can be set to a value that minimizes the torque difference in a valve lift mode change. A possible reason for not reaching the balance VVT position could be that this value lies outside the operational limits of the variable valve timing system. In turn, the operational limits of the VVT system could be dependent on valve lift durations and/or max opening points (MOP:s) for individual cam lobes.

Preferably, the method comprises determining a current value of the VVT position, and switching valve lift mode if the current value is within a range comprising the balance value. Preferably, the range is determined at least partly based on at least one offset value in relation to the balance value of the valve timing, and preferably, at least one of the offset values is predetermined. Alternatively, at least one of the offset values is determined at least partly based on at least one engine operation parameter, which could be, for example, the engine speed, the difference between required and current load, and/or the gear position. If the offset value is determined based on at least one engine operation parameter, the method provides a lot of flexibility, since it allows for the VVT range, within which a valve lift mode shift is allowed, to be adjusted depending on operational conditions. During some of these conditions a valve lift mode shift could cause a smaller torque step than during other operational conditions, for which reason the VVT range under some circumstances could be to relatively large.

As will be described further below, in one embodiment the range is determined at least partly based on at least one offset value in relation to the balance value of the VVT position, the method further comprising determining a degree of requested transient torque, and determining at least one of the offset values at least partly based on the degree of requested transient torque.

The object of the invention is also reached with an internal combustion engine according to any of the claims 11-20.

### DESCRIPTION OF THE FIGURES

Below, the invention will be described in detail with reference to the drawing, in which
- fig. 1 is a schematic view of parts of an internal combustion engine, comprising a variable valve timing system and a variable valve lift system, the latter in a low lift position,
- fig. 2 is a detail of the view in fig. 1, where the cam profiles have been shifted to a high lift position,
- fig. 3 is a block diagram depicting a method according to a first embodiment of the invention,
- fig. 4a-4d are diagrams of variable valve timing values and load, and
- fig. 5 is a block diagram depicting methods according to an alternative embodiment of the invention.

### DETAILED DESCRIPTION

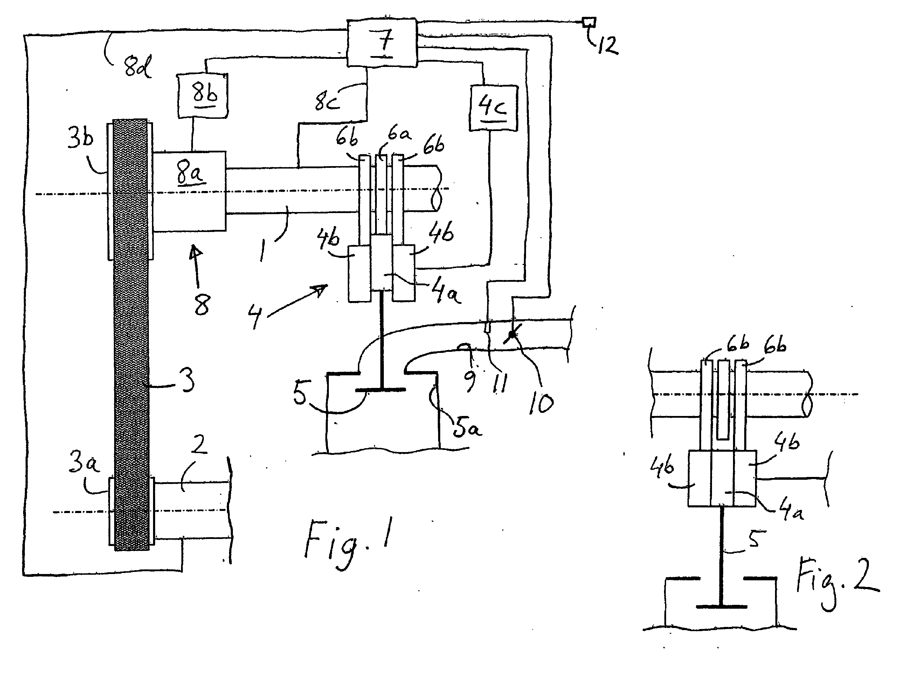

Fig. 1 shows schematically parts of a naturally aspirating internal combustion engine. A camshaft 1 is driven by a crankshaft 2 via a belt (or chain) 3, a crankshaft wheel 3a, and a camshaft wheel 3b in a manner known in the art. The engine comprises a variable valve lift system in the form of a cam profile shifting (CPS) system 4, adapted to change the lift profile of intake and/or exhaust valves of the engine, by changing the valve lift provided by camlobes 6a, 6b on the camshaft 1. In fig. 1 only one valve, in the form of an intake valve 5 at a cylinder 5a is shown. In this example, for each valve 5 there is provided one low lift camlobe 6a and two high lift camlobes 6b.

In operation each of the camlobes 6a, 6b acts on valve actuators 4a, 4b, located between the camlobes and the valve. The valve actuators are connectable by connecting means (not shown), in turn controllable by a CPS hydraulic control system 4c. In turn the CPS hydraulic control system 4c in controllable by an engine control unit (ECU) 7. The ECU 7 has computational capabilities and storage capabilities, and can be formed by one or more physically separate, but logically connected devices. The current CPS system 4 setting is known to the ECU 7. In a low lift mode, shown in fig. 1, the valve actuators 4a, 4b are not fixed to each other, which results in the valve lift being controlled by the low lift camlobe 6a.

As can be seen in fig. 2, in a high lift mode the valve actuators 4a, 4b are fixed to each other, so that the valve motion is controlled by the high lift camlobes 6b.

Alternatively, still within the scope of the present invention, the CPS system can be provided in a variety of manners known in the art, for example as described in US5950583A. In particular, the CPS actuator can be provided in alternative manners, and the CPS system can be adapted to assume more than two valve lift modes, or cam profile modes.

The engine also comprises a variable valve timing (VVT) system 8, which is adapted to set the camshaft 1 at desired angular positions in relation to the camshaft wheel 3b. The VVT system comprises a timing actuator 8a, for example of the type described in US6135077A, at the camshaft wheel 3b. The timing actuator 8a is controllable by a VVT hydraulic control system 8b. In turn the VVT hydraulic control system 8b in controllable by the ECU 7. Also, by means of a connection 8c to a cam phase detector and a connection 8d to a crankshaft position detector, the ECU can determine a current value of the VVT position.

Also provided are means (not shown) to establish the engine speed, in a manner known in the art.

Besides the engine speed, the method according to this embodiment of the invention uses a pressure parameter, regarding which the following should be noted: The pressure ratio across the cylinder(s), i.e. the intake/exhaust relative pressure, is an accurate parameter for the method, but the exhaust pressure is difficult to measure in practice.

In the embodiment presented here, the intake manifold relative pressure is used as an approximation of the intake/exhaust relative pressure. In a naturally aspirating engine, the intake manifold relative pressure, i.e. intake/atmospheric pressure ratio, is a good parameter to use, since it is a good approximation of said intake/exhaust relative pressure, and since it is easy to establish in practice. As an alternative approximation for a naturally aspirating engine, the air flow, detected by means of a suitable sensor in the intake manifold, could be used instead of, or in combination with, the manifold relative pressure. As a further alternative for a naturally aspirated engine, the position of the throttle valve 10 can be used to obtain an approximate value of the intake/exhaust relative pressure.

For a turbo charged engine, and for the intake/exhaust relative pressure, the exhaust pressure can be approximated as a function of the air flow added to the atmospheric pressure. Alternatively, in a turbo charged engine, the exhaust pressure can be approximated as a function of the turbo charge pressure.

As can be seen in fig. 1, in an intake manifold 9 a throttle valve 10 is controllable by the ECU 7. Downstream of the throttle valve 10 is a first pressure sensor 11, for providing the ECU 7 with values of the manifold absolute pressure (MAP). Also, a second pressure sensor 12 is connected to the ECU for providing the latter with values of the atmospheric pressure (ATM). The ECU 7 can determine values of an intake manifold relative pressure as a ratio between the MAP and the ATM.

The invention is based on the realisation that the volumetric efficiency and the load, on which the output torque (brake torque) is partly dependent, are in turn dependent mainly on the engine speed, the intake/exhaust relative pressure, the value of the VVT system 8, and the setting of the CPS system 4. Based on said realisation, it is in principle possible to fmd, for any given engine speed and any given intake/exhaust relative pressure, a VVT system setting value that gives the same volumetric efficiency, and therefore the same torque, in both valve lift modes, herein also referred to as CPS modes. Here, the VVT system setting value that gives the same volumetric efficiency in both CPS modes is referred to as the VVT balance value *BV_{VVT}.*

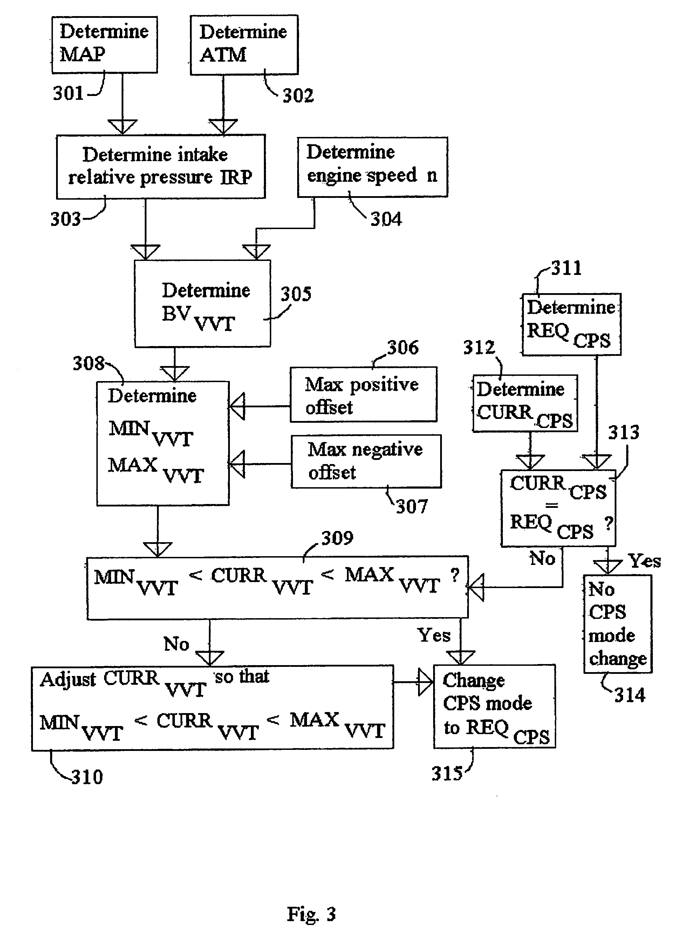

As can be seen in fig. 3, in this embodiment of the invention, MAP and ATM are determined 301, 302, and based thereon, the intake relative pressure, IRP, is determined 303. Based on the relative pressure IRP and the engine speed, n, 304, the VVT balance value *BV_{VVT}* is determined 305, as specified below:

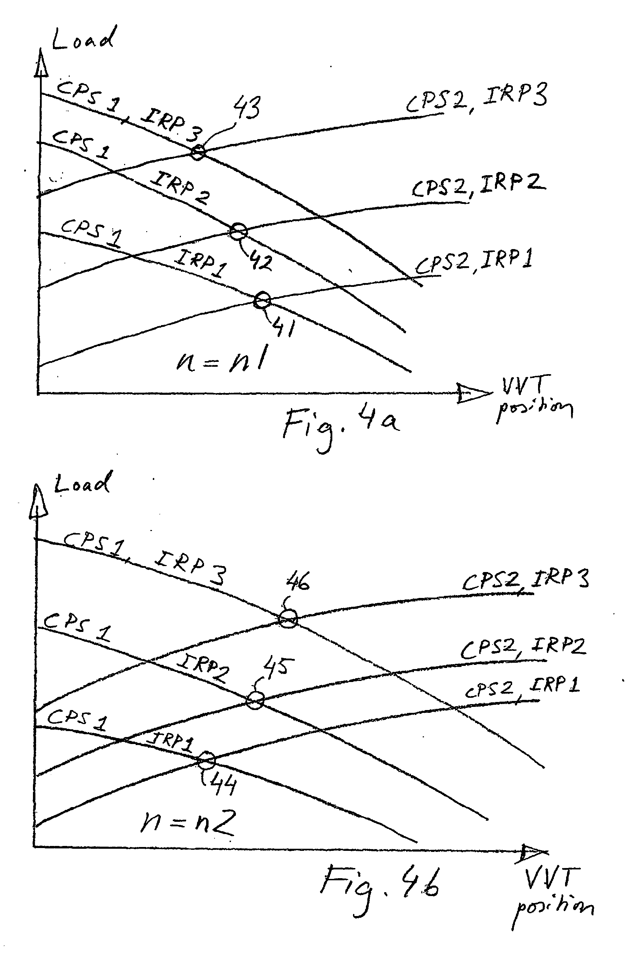

Referring to fig. 4a and 4b, the ECU 7 stores predetermined data correlating, for each of the CPS modes, values of the engine speed, n, the intake relative pressure, IRP, the VVT position, and the load. Fig. 4a depicts an example of a part of this correlation data, showing the load as a function of the VVT position at a certain engine speed nl. In this example, the load refers to the air load per engine revolution or per combustion, or the engine air mass flow per revolution or per combustion, but alternatively other corresponding parameters known to the skilled person could be used. Further, in this example there are two possible CPS modes, a first mode CPS1 and a second mode CPS2, but the method is applicable also the engines having more than two such modes. For each mode CPS1, CPS2, there is for a number of values of the intake relative pressure IRP1, IRP2, IRP3 a curve giving a correlation between VVT positions and the load. Circles 41, 42, 43 indicate positions where curves for different CPS modes and for the same intake relative pressure intersect, i.e. where the load is the same at both CPS modes and at respective intake relative pressures IRP1, IRP2, IRP3, respectively. Thus, the VVT balance value *BV_{VVT}* is the VVT position at such a point 41, 42, 43 of intersection.

Similarly, as shown in fig. 4b, for some other engine speed n2, the VVT balance value *BV_{VVT}* is determined as the VVT position at a point 44, 45, 46 of intersection of curves for different CPS modes and for the same intake relative pressure.

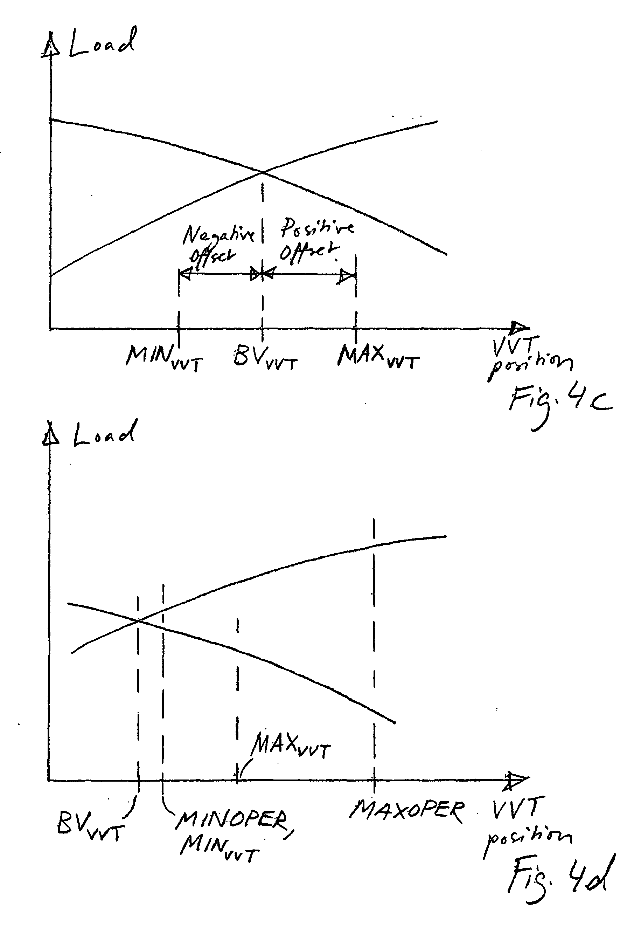

Referring to fig. 3 and 4c: When the VVT balance value *BV_{VVT}* is determined, a VVT position range, *MIN_{VVT}* - *MAX_{VVT},* comprising the balance value *BV_{VVT}* is determined. In general, the VVT position range is determined based on at least one predetermined offset value in relation to the balance value of the valve timing. More particularly, based the VVT balance value *BV_{VVT},* a predetermined positive offset value 306 and a predetermined negative offset value 307, a minimum limit *MIN_{VVT}* and a maximum limit *MAX_{VVT}* for the VVT position is determined 308.

A special case is shown in fig. 4d. Here the determined VVT balance value *BV_{VVT}*, is outside an operational range, MINOPER-MAXOPER, of the VVT system. Thereby, the VVT position is controlled so as to minimize the torque difference in a CPS mode change. More specifically, a desired VVT position is determined within the operational range, MINOPER-MAXOPER. In the example in fig. 4d, the desired VVT position is at the lower VVT limit MINOPER. Subsequently, a VVT position range, *MIN_{VVT}* - *MAX_{VVT}*, comprising the desired VVT position is determined. In this example, based the desired VVT position and a predetermined positive offset value, a maximum limit *MAX_{VVT}* for the VVT position is determined.

As can be seen in fig. 3, after determining a current VVT position value *CURR_{VVT},* it is determined whether the current VVT position value is within the range delimited by the minimum limit *MIN_{VVT}* and the maximum limit *MAX_{VVT}* for the VVT position, 309. If the current VVT position value is outside said range, the VVT position is changed so as to fall within the range, 310. This could be done regardless of a request to shift the CPS mode in order to prepare the system for a CPS mode shift request.

The ECU 7 is also adapted to determine a requested CPS mode *REQ_{CPS}* 311 and a current CPS mode *CURR_{CPS}* 312, and determine if the requested CPS mode *REQ_{CPS}* and the current CPS mode *CURR_{CPS}* are identical 313. If they are identical, no CPS mode change is carried out 314. If the requested CPS mode *REQ_{CPS}* and the current CPS mode *CURR_{CPS}* are not identical, and the current VVT position value is within the range *MIN_{VVT} - MAX_{VVT}* 309, the CPS mode is changed to the requested CPS mode *REQ_{CPS}* 315. Also, the CPS mode is changed to the requested CPS mode *REQ_{CPS}* 315 if the current VVT position has been adjusted to fall within this range *MIN_{VVT} - MAX_{VVT}* 310.

Alternatively, if it is determined 309 that the current VVT value is outside the range delimited by the minimum limit *MIN_{VVT},* and the maximum limit *MAX_{VVT},* for the VVT position, simply no change of the CPS system mode is carried out. Also, if it is determined 309 that the current VVT value is outside said range, a CPS mode shift could be based on other criterias.

As mentioned, in the determination of the VVT balance value *BV_{VVT},* alternative parameters can be used instead of the load. For example, the volumetric efficiency can be used since it is in a way similar to the load dependent upon the CPS modes, engine speed, the intake/exhaust relative pressure and the VVT position. Also, instead of the load, the CPS modes, engine speed, the intake/exhaust relative pressure and the VVT position can be mapped against the output torque (brake torque). In the latter case, the air/fuel ratio, the combustion efficiency, and the friction loss (partly dependent on engine oil temperature) can be, for the method described here, assumed to be independent of the CPS modes. Alternatively, one or more of the air/fuel ratio, the combustion efficiency, and the friction loss can be determined for the respective CPS modes, so that consideration is given to such a parameter as well. For example, when determining whether to change the CPS mode, consideration can be given to a determined combustion efficiency in the required CPS mode. If it is determined, based on the calculated combustion efficiency that there is no risk of knocking within the VVT range *MIN_{VVT} - MAX_{VVT}* in the required CPS mode, the CPS mode can be changed. However, if it is determined that there is a risk of knocking in said range in the required CPS mode, the VVT position, or the range, can be offset to counteract this effect.

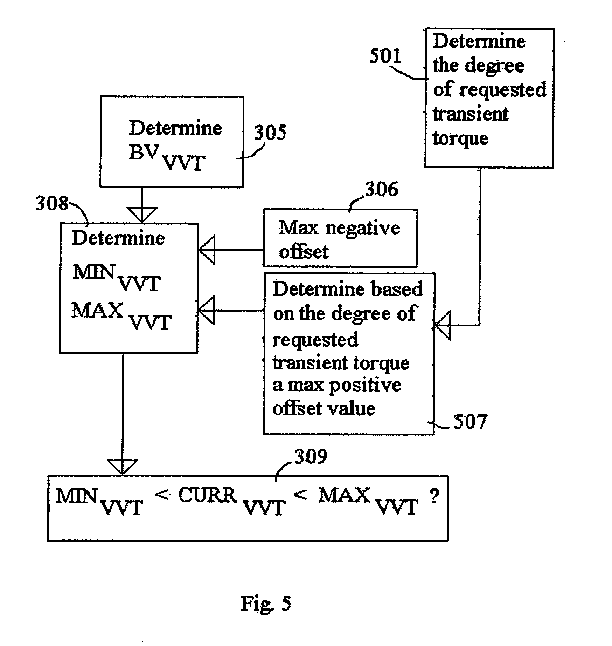

Fig. 5 shows some of the steps in a method according an alternative embodiment of the invention. Differing from the embodiment in fig. 3, consideration is made to transient torque requests. A transient torque request can for example be the result the driver of a vehicle, in which the engine is operating, pushing the accelerator pedal quickly. Is such a case, the focus is shifted from creating a smooth CPS mode change, to accomplishing a fast response to the torque request. In this embodiment, the ECU determines the degree of requested transient torque 501. The degree of requested transient torque is partly dependent on the pace at which the accelerator pedal is pushed. Based on the degree of requested transient torque a maximum positive offset value for the VVT position is determined 507. If the degree of requested transient torque is relatively large, a relatively large maximum positive offset value for the VVT position is allowed. The CPS mode change takes place in the same manner as described above with reference to fig. 3.

As an alternative to the embodiment described with reference to fig. 5, the method could comprise determining whether the requested transient torque is higher than a predetermined threshold value, and if it is, allowing a CPS mode change regardless of whether the VVT position is within the VVT position range, *MIN_{VVT}* - *MAX_{VVT}.*

It should be noted that the invention is equally applicable to engines with variable valve lift systems providing more than two valve lift modes. It should also be noted that the method according to the invention is equally applicable to engines with spark ignition and engines with compression ignition.

## Claims

1. A method for controlling valve lift shifting in an internal combustion engine comprising a variable valve lift system(4) whereby the engine can operate selectively in either of at least two valve lift modes, and a variable valve timing system (8), **characterized in that** it comprises
controlling the variable valve timing system (8), so as to reduce the difference between two of the valve lift modes regarding the output torque of the engine, by determining a balance value *(BV_{VVT})* of the valve timing such that the output torque is essentially the same for two of the valve lift modes at the balance value *(BV_{VVT}).*

2. A method according to claim 1, wherein the variable valve timing system (8) is controlled based at least partially on the engine speed (n) and a pressure parameter (IRP) of the engine.

3. A method according to claim 2, wherein the pressure parameter is at least partly based on the pressure in an intake manifold of the engine.

4. A method according to claim 2, wherein the pressure parameter is at least partly based on the air flow in the intake manifold.

5. A method according to claim 1 or 2, wherein the variable valve timing system (8) is controlled based at least partially on the engine speed (n) and the position of a throttle valve (10) of the engine.

6. A method according to any one of the claims 1-5, comprising determining a current value *(CURR_{VVT} )* of the valve timing, and switching valve lift mode if the current value is within a range *(MIN_{VVT} - MAX_{VVT})* comprising the balance value *(BV_{VVT}*).

7. A method according to claim 6, wherein the range *(MIN_{VVT} - MAX_{VVT})* is determined at least partly based on at least one offset value in relation to the balance value *(BV_{VVT})* of the valve timing.

8. A method according to claim 7, wherein at least one of the offset values is predetermined.

9. A method according to claim 7, wherein at least one of the offset values is determined at least partly based on at least one engine operation parameter.

10. A method according to claim 7, further comprising determining a degree of requested transient torque, and determining at least one of the offset values at least partly based on the degree of requested transient torque.

11. An internal combustion engine comprising an engine control unit (7), a variable valve lift system (4) whereby the engine can operate selectively in either of at least two valve lift modes, and a variable valve timing system (8), **characterized in that** the engine control unit (7) is adapted to control the variable valve timing system (8), so as to reduce the difference between two of the valve lift modes regarding the output torque of the engine, by determining a balance value *(BV_{VVT})* of the valve timing such that the output torque is essentially the same for two of the valve lift modes at the balance value *(BV_{VVT}).*

12. An internal combustion engine according to claim 11, wherein the engine control unit (7) is adapted to control the variable valve timing system (8) based at least partially on the engine speed (n) and a pressure parameter (IRP) of the engine.

13. An internal combustion engine according to claim 12, wherein the engine control unit (7) is adapted to determine the pressure parameter at least partly based on the pressure in an intake manifold of the engine.

14. An internal combustion engine according to claim 12, wherein the engine control unit (7) is adapted to determine the pressure parameter at least partly based on the air flow in the intake manifold.

15. An internal combustion engine according to claim 11 or 12, wherein the engine control unit (7) is adapted to control the variable valve timing system (8) based at least partially on the engine speed (n) and the position of a throttle valve (10) of the engine.

16. An internal combustion engine according to any one of the claims 11-15, wherein the engine control unit (7) is adapted to determine a current value *(CURR_{VVT})* of the valve timing, and to switch valve lift mode if the current value is within a range *(MIN_{VVT}- MAX_{VVT})* comprising the balance value *(BV_{VVT}).*

17. An internal combustion engine according to claim 16, wherein the engine control unit (7) is adapted to determine the range *(MIN_{VVT} - MAX_{VVT})* at least partly based on at least one offset value in relation to the balance value (*BV_{VVT}*) of the valve timing.

18. An internal combustion engine according to claim 17, wherein at least one of the offset values is predetermined.

19. An internal combustion engine according to claim 17, wherein the engine control unit (7) is adapted to determine at least one of the offset values at least partly based on at least one engine operation parameter.

20. An internal combustion engine according to claim 17, wherein the engine control unit (7) is adapted to determine a degree of requested transient torque, and to determine at least one of the offset values at least partly based on the degree of requested transient torque.

## Patentansprüche

1. Verfahren zum Steuern einer Ventilhebeversetzung in einem Verbrennungsmotor umfassend ein variables Ventilhebesystem (4), wodurch der Motor selektiv in zumindest einem von zwei Ventilhebemodi agieren kann, und ein variables Ventilterminierungssystem (8), **dadurch gekennzeichnet, dass** es umfasst:
Steuern des variablen Ventilterminierungssystems (8), um die Differenz zwischen zwei der Ventilhebemodi in Bezug auf das Ausgabemoment des Motors zu reduzieren, indem ein Gleichgewichtswert (BV_{VVT}) der Ventilterminierung derart bestimmt wird, dass das Ausgabemoment für zwei der Ventilhebemodi beim Gleichgewichtswert (BV_{VVT}) im Wesentlichen das gleiche ist.

2. Verfahren gemäß Anspruch 1, bei dem das variable Ventilterminierungssystem (8) zumindest teilweise auf der Motorgeschwindigkeit (n) und einem Druckparameter (IRP) des Motors basierend gesteuert wird.

3. Verfahren gemäß Anspruch 2, bei dem der Druckparameter zumindest teilweise auf dem Druck in einem Ansaugrohr des Motors basiert.

4. Verfahren gemäß Anspruch 2, bei dem der Druckparameter zumindest teilweise auf dem Luftstrom des Ansaugrohrs basiert.

5. Verfahren gemäß Anspruch 1 oder 2, bei dem das variable Ventilterminierungssystem (8) zumindest teilweise auf der Motorgeschwindigkeit (n) und der Position eines Drosselventils (10) des Motors basierend gesteuert wird.

6. Verfahren gemäß einem der Ansprüche 1-5, umfassend:
Bestimmen eines aktuellen Werts (CURR_{VVT}) der Ventilterminierung, und Schalten eines Ventilhebemodus, falls sich der aktuelle Wert innerhalb eines den Gleichgewichtswert (BV_{VVT}) umfassenden Bereichs (MIN_{VVT}-MAX_{VVT}) befindet.

7. Verfahren gemäß Anspruch 6, bei dem der Bereich (MIN_{VVT} - MAX_{VVT}) zumindest teilweise auf zumindest einem Versatzwert in Relation mit dem Gleichgewichtswert (BV_{VVT}) der Ventilterminierung basierend bestimmt wird.

8. Verfahren gemäß Anspruch 7, bei dem zumindest einer der Versatzwerte vorbestimmt ist.

9. Verfahren gemäß Anspruch 7, bei dem zumindest einer der Versatzwerte zumindest teilweise auf zumindest einem Motorbetriebsparameter basierend bestimmt wird.

10. Verfahren gemäß Anspruch 7, weiter umfassenden:
Bestimmen eines Maßes eines geforderten Übergangsmoments, und Bestimmen zumindest eines der Versatzwerte zumindest teilweise auf dem Maß des geforderten Übergangsmoments basierend.

11. Verbrennungsmotor umfassend: eine Motorsteuereinheit (7), ein variables Ventilhebesystem (4), wodurch der Motor selektiv in einem von zumindest zwei Ventilhebemodi agieren kann, und ein variables Ventilterminierungssystem (8), **dadurch gekennzeichnet, dass** die Motorsteuereinheit (7) das variable Ventilterminierungssystem (8) steuern kann, um die Differenz zwischen zwei der Ventilhebemodi in Bezug auf das Ausgabemoment des Motors zu reduzieren, indem ein Gleichgewichtswert (BV_{VVT}) der Ventilterminierung derart bestimmt wird, dass das Ausgabemoment für zwei der Ventilhebemodi beim Gleichgewichtswert (BV_{VVT}) im Wesentlichen das gleiche ist.

12. Verbrennungsmotor gemäß Anspruch 11, bei dem die Motorsteuereinheit (7) das variable Ventilterminierungssystem (8) zumindest teilweise auf der Motorgeschwindigkeit (n) und dem Druckparameter (IRP) des Motors basierend steuern kann.

13. Verbrennungsmotor gemäß Anspruch 12, bei dem die Motorsteuereinheit (7) den Druckparameter zumindest teilweise auf dem Druck in einem Ansaugrohr des Motors basierend bestimmen kann.

14. Verbrennungsmotor gemäß Anspruch 12, bei dem die Motorsteuereinheit (7) den Druckparameter zumindest teilweise auf dem Luftstrom im Ansaugrohr basierend bestimmen kann.

15. Verbrennungsmotor gemäß Anspruch 11 oder 12, bei dem die Motorsteuereinheit (7) das variable Ventilterminierungssystem (8) zumindest teilweise auf der Motorgeschwindigkeit (n) und der Position eines Drosselventils (10) des Motors basierend steuern kann.

16. Verbrennungsmotor gemäß einem der Ansprüche 11-15, bei dem die Motorsteuereinheit (7) einen aktuellen Wert (CURR_{VVT}) der Ventilterminierung bestimmen kann, und einen Ventilhebemodus schalten kann, falls sich der aktuelle Wert innerhalb eines den Gleichgewichtswert (BV_{VVT}) umfassenden Bereichs (MIN_{VVT} - MAX_{VVT}) befindet.

17. Verbrennungsmotor gemäß Anspruch 16, bei dem die Motorsteuereinheit (7) den Bereich (MIN_{VVT} - MAX_{VVT}) zumindest teilweise auf zumindest einem Versatzwert in Relation mit dem Gleichgewichtswert (BV_{VVT}) der Ventilterminierung basierend bestimmen kann.

18. Verbrennungsmotor gemäß Anspruch 17, bei dem zumindest einer der Versatzwerte vorbestimmt ist.

19. Verbrennungsmotor gemäß Anspruch 17, bei dem die Motorsteuereinheit (7) zumindest einen der Versatzwerte zumindest teilweise auf zumindest einem Motorbetriebsparameter basierend bestimmen kann.

20. Verbrennungsmotor gemäß Anspruch 17, bei dem die Motorsteuereinheit (7) ein Maß eines geforderten Übergangsmoments bestimmen kann, und zumindest einen der Versatzwerte zumindest teilweise auf dem Maß des geforderten Übergangsmoments basierend bestimmen kann.

## Revendications

1. Un procédé de commande d'un changement de levée de soupape dans un moteur à combustion interne comprenant un système de levée de soupape variable (4), le moteur pouvant fonctionner de façon sélective selon au moins deux modes de levée de soupape, et un système de réglage variable de soupapes (8), **caractérisé en ce qu'**il comprend
le fait de commander le système de réglage variable de soupapes (8) de façon à réduire la différence de couple de sortie du moteur entre deux des modes de levée de soupape, en déterminant une valeur d'équilibrage *(BV_{VVT}*) du réglage de soupapes de telle façon que le couple de sortie soit sensiblement le même pour deux des modes de levée de soupape à la valeur d'équilibrage (*BV_{VVT}*).

2. Un procédé selon la revendication 1, le système de réglage variable de soupapes (8) étant commandé au moins partiellement en fonction de la vitesse de moteur (n) et d'un paramètre de pression (IRP) du moteur.

3. Un procédé selon la revendication 2, le paramètre de pression étant au moins partiellement déterminé en fonction de la pression dans un collecteur d'admission du moteur.

4. Un procédé selon la revendication 2, le paramètre de pression étant au moins partiellement déterminé en fonction de l'écoulement d'air dans le collecteur d'admission.

5. Un procédé selon la revendication 1 ou la revendication 2, le système de réglage variable de soupapes (8) étant commandé au moins partiellement en fonction de la vitesse du moteur (n) et de la position d'une soupape d'étranglement (10) du moteur.

6. Un procédé selon l'une quelconque des revendications 1 à 5, comprenant la détermination d'une valeur courante *(CURR_{VVT})* du réglage de soupapes, et le changement de mode de levée de soupape si la valeur courante se situe dans une fourchette *(MIN_{VVT} - MAX_{VVT})* comprenant la valeur d'équilibrage *(BV_{VVT}).*

7. Un procédé selon la revendication 6, la fourchette *(MIN_{VVT} - MAX_{VVT})* étant au moins partiellement déterminée en fonction d'au moins une valeur de déphasage en relation avec la valeur d'équilibrage *(BV_{VVT)}* du réglage de soupapes.

8. Un procédé selon la revendication 7, au moins l'une des valeurs de déphasage étant prédéterminée.

9. Un procédé selon la revendication 7, au moins une des valeurs de déphasage étant déterminée au moins partiellement en fonction d'au moins un paramètre de fonctionnement du moteur.

10. Un procédé selon la revendication 7, comprenant en outre la détermination d'un degré de couple transitoire nécessaire, et la détermination d'au moins une des valeurs de déphasage au moins partiellement en fonction du degré de couple transitoire nécessaire.

11. Un moteur à combustion interne comprenant une unité de commande de moteur (7), un système de levée de soupape variable (4) par l'effet duquel le moteur peut fonctionner de façon sélective selon au moins deux modes de levée de soupape, et un système de réglage variable de soupapes (8), **caractérisé en ce que** l'unité de commande de moteur (7) est prévue pour commander le système de réglage variable de soupapes (8) de façon à réduire la différence de couple de sortie du moteur entre deux des modes de levée de soupape, en déterminant une valeur d'équilibrage *(BV_{VVT})* du réglage de soupapes de telle sorte que le couple de sortie soit sensiblement le même pour deux des modes de levée de soupape à la valeur d'équilibrage *(BV_{VVT}).*

12. Un moteur à combustion interne selon la revendication 11, l'unité de commande de moteur (7) étant prévue pour commander le système de réglage variable de soupapes (8) au moins partiellement en fonction de la vitesse du moteur (n) et d'un paramètre de pression (IRP) du moteur.

13. Un moteur à combustion interne selon la revendication 12, l'unité de commande de moteur (7) étant prévue pour déterminer le paramètre de pression au moins partiellement en fonction de la pression dans un collecteur d'admission du moteur.

14. Un moteur à combustion interne selon la revendication 12, l'unité de commande de moteur (7) étant prévue pour déterminer le paramètre de pression au moins partiellement en fonction de l'écoulement d'air dans le collecteur d'admission.

15. Un moteur à combustion interne selon la revendication 11 ou la revendication 12, l'unité de commande de moteur (7) étant prévue pour commander le système de réglage variable de soupapes (8) au moins partiellement en fonction de la vitesse du moteur (n) et de la position d'une soupape d'étranglement (10) du moteur.

16. Un moteur à combustion interne selon l'une quelconque des revendications 11 à 15, l'unité de commande de moteur (7) étant prévue pour déterminer une valeur courante *(CURR*_{VVT}*)* du réglage de soupapes, et pour changer le mode de levée de soupape si la valeur courante se situe dans une fourchette *(MIN_{VVT} - MAX_{VVT})* comprenant la valeur d'équilibrage *(BV_{VVT}).*

17. Un moteur à combustion interne selon la revendication 16, l'unité de commande de moteur (7) étant prévue pour déterminer la fourchette *(MIN_{VVT} - MAX_{VVT})* au moins partiellement en fonction d'au moins une valeur de déphasage en relation avec la valeur d'équilibrage *(BV_{VVT)}* du réglage de soupapes.

18. Un moteur à combustion interne selon la revendication 17, au moins l'une des valeurs de déphasage étant prédéterminée.

19. Un moteur à combustion interne selon la revendication 17, l'unité de commande de moteur (7) étant prévue pour déterminer au moins une des valeurs de déphasage au moins partiellement en fonction d'au moins un paramètre de fonctionnement du moteur.

20. Un moteur à combustion interne selon la revendication 17, l'unité de commande de moteur (7) étant prévue pour déterminer un degré de couple transitoire nécessaire, et pour déterminer au moins une des valeurs de déphasage au moins partiellement en fonction du degré de couple transitoire nécessaire.
